# EUROPEAN PATENT APPLICATION

(11) **EP 4 564 749 A1**
(43) Date of publication of application: **04.06.2025**
(21) Application number: 23884727.1
(22) Date of filing: 26.10.2023
(51) Int. Cl.: H04L 12/28, H04L 41/0813

(54) **DEVICE REPLACEMENT CONFIGURATION METHOD AND APPARATUS**

(30) Priority: 04.11.2022 CN 202211378727
(71) Applicant: Huawei Technologies Co., Ltd., Shenzhen, Guangdong 518129 (CN)
(72) Inventor: ZHAO, Xinju, Shenzhen, Guangdong 518129 (CN); HUANG, Shaolin, Shenzhen, Guangdong 518129 (CN)
(74) Representative: Körber, Martin Hans
(86) International application number: PCT/CN2023/126867
(87) International publication number: WO 2024/093795

(57) **Abstract**

A device replacement configuration method, and an apparatus are provided, and relate to the field of terminal technologies, to simplify a device replacement procedure and improve device replacement efficiency. The method includes: A second terminal sends request information to a management server, where the request information indicates to obtain device registration information allocated by the management server to a first terminal, and the second terminal is configured to replace the first terminal; and the management server sends the device registration information of the first terminal to the second terminal based on the request information.

## Description

This application claims priority to Chinese Patent Application No. 202211378727.4, filed with the China National Intellectual Property Administration on November 4, 2022 and entitled "DEVICE REPLACEMENT CONFIGURATION METHOD, AND APPARATUS", which is incorporated herein by reference in its entirety.

### TECHNICAL FIELD

This application relates to the field of terminal technologies, and in particular, to a device replacement configuration method, and an apparatus.

### BACKGROUND

With popularization of intelligent terminals, a large quantity of intelligent terminals are connected to a network. If a terminal is faulty and needs to be repaired, or a user needs to replace a terminal with a new terminal, how to efficiently implement device replacement is a problem that needs to be resolved currently.

In a current implementation of device replacement, device replacement needs to be implemented after a new terminal device is bound to a network, and the new terminal device needs to perform a specific procedure, for example, device changing or device replacement. However, a current system of some terminal devices does not support the device changing/device replacement procedure. As a result, device replacement cannot be implemented, or a system upgrade needs to be performed on a new device for replacement, and the device replacement procedure is complex. In addition, after the device changing procedure or the device replacement procedure is performed, the network configures new device registration information for the new device, and the new device registration information is different from device registration information of an original device. As a result, configuration of the original device may not be inherited. For example, some functions or services that are based on the device registration information cannot be performed, and configuration for the new device needs to be performed. Therefore, service continuity cannot be ensured, and user experience is poor.

### SUMMARY

This application provides a device replacement configuration method, and an apparatus, to simplify a complex device replacement procedure and improve device replacement efficiency.

To achieve the foregoing objective, this application uses the following technical solutions.

According to a first aspect, a device replacement configuration method is provided, where the method includes: A second terminal sends request information to a management server, where the request information indicates to obtain device registration information allocated by the management server to a first terminal, and the second terminal is configured to replace the first terminal; and the management server sends the device registration information of the first terminal to the second terminal based on the request information.

In the foregoing implementation, the management server may deliver the device registration information previously allocated to the first terminal as device registration information of the second terminal to the second terminal, so that the device registration information of the second terminal is the same as the device registration information of the first terminal before and after device replacement. In other words, after an old device is replaced with a new device, the same device registration information is still kept, so that service continuity can be ensured after device replacement is implemented, and device replacement efficiency can be effectively improved.

In an implementation, the request information includes an identifier of the second terminal. In other words, the request information sent by the second terminal to the management server may include the identifier of the second terminal. In this way, the management server can obtain, based on the identifier of the second terminal, device registration information of the corresponding old device, namely, the first terminal, the device registration information of the corresponding old device is matched for the new device, and the device registration information of the new device is consistent with the device registration information of the old device. This improves implementation efficiency of device replacement.

In an implementation, before the second terminal sends the request information to the management server, the method further includes: In response to a device replacement operation of a user, a control device sends a replacement request to the management server, where the replacement request includes an identifier of the first terminal, and indicates to implement device replacement for the first terminal; and the control device receives verification information from the management server, where the verification information is generated by the management server based on the replacement request and is used for identity authentication.

In the foregoing implementation, the control device may trigger the replacement request. For example, a smartphone first sends the replacement request to the management server, where the replacement request is used to send an identifier of the replaced old device, namely, the first terminal, to the management server, and indicates the management server to implement a device replacement operation on the first terminal. In this way, the management server subsequently allocates device registration information corresponding to the first terminal to the new device after receiving request information. This simplifies a device replacement procedure, and improves device replacement efficiency.

In an implementation, the method further includes: The control device sends replacement information to the management server, where the replacement information includes the identifier of the second terminal and the verification information, and indicates that the second terminal is configured to replace the first terminal. In the foregoing implementation, the management server may perform identity authentication on the replacement information of the control device. This can further ensure security of a device replacement operation.

In an implementation, that the management server sends the device registration information of the first terminal to the second terminal based on the request information specifically includes: The management server obtains the device registration information of the first terminal based on the identifier of the second terminal that is included in the request information, and sends the device registration information of the first terminal to the second terminal, where the management server stores a replacement relationship between the second terminal and the first terminal.

In the foregoing implementation, the management server may determine the replacement relationship between the first terminal and the second terminal based on information previously sent by the control device, so that the management server may obtain, through an inquiry, based on the identifier of the second terminal that is carried in the received request information, the corresponding device registration information of the first terminal, and allocate the device registration information to the second terminal. In this way, the device registration information of the new device is consistent with the device registration information of the old device after the old device is replaced with the new device, service continuity is maintained, and device replacement efficiency is improved.

In an implementation, the request information is device registration request information. In other words, in an implementation of this application, device replacement for an old device may be implemented in a device registration procedure of a new device, so that the device replacement procedure can be simplified, and the new device does not sense the device replacement process, and does not need to perform an operation, for example, a system update of the new device, thereby improving implementation efficiency of device replacement.

In an implementation, the request information includes the identifier of the first terminal. In other words, the request information sent by the second terminal to the management server may include the identifier of the first terminal. In this way, the management server may obtain, based on the identifier of the first terminal, the device registration information previously allocated to the first terminal, to allocate the device registration information corresponding to the first terminal to the new device, namely the second terminal, and the device registration information of the new device is consistent with the device registration information of the old device. This improves implementation efficiency of device replacement.

In an implementation, before the second terminal sends the request information to the management server, the method further includes: In response to a device replacement operation of a user, a control device sends a replacement request to the second device, where the replacement request includes the identifier of the first terminal, and is used to request to replace the first terminal.

In an implementation, the request information is device registration request information or device replacement request information. The request information may be a device registration request, in other words, in an implementation of this application, an indication used to request to perform device replacement for the old device may be added to a device registration procedure of the new device, and specifically, a field may be extended to indicate an identifier of the first terminal, so that the device replacement procedure can be simplified, and the new device does not sense the device replacement process, and does not need to perform an operation, for example, a system update of the new device, thereby improving implementation efficiency of device replacement.

Alternatively, in another implementation of this application, the device replacement request information may indicate the identifier of the first terminal that requests replacement, and then the second terminal sends the device registration request information to the management server, to implement a device replacement procedure and a device registration procedure, and improve device replacement efficiency.

In an implementation, that the management server sends the device registration information of the first terminal to the second terminal based on the request information specifically includes: The management server obtains the device registration information of the first terminal based on the identifier of the first terminal, and sends the device registration information of the first terminal to the second terminal.

In the foregoing implementation, the management server may determine the replacement relationship between the first terminal and the second terminal based on the information sent by the second terminal, so that the management server may obtain, through an inquiry, based on the identifier of the first terminal that is carried in the received request information, the device registration information previously allocated to the first terminal, and allocate the device registration information to the second terminal. In this way, the device registration information of the new device is consistent with the device registration information of the old device after the old device is replaced with the new device, service continuity is maintained, and device replacement efficiency is improved.

In an implementation, the identifier of the terminal includes a device serial number SN and/or physical media access control address MAC information.

In an implementation, the first terminal and the second terminal are terminal devices of a same type, or terminal devices having a same function, or terminal devices of a same device model; or the first terminal and the second terminal are a same terminal device, where the second terminal refers to a state of the first terminal on which fault repair is performed. In other words, the implementation provided in this application is applicable to a scenario in which a device of a same type is replaced with a new device, and is further applicable to a scenario in which a device accesses a network and registers after the same device is repaired due to a fault. The implementation is flexible and a procedure is simple.

In an implementation, the method further includes: The management server sends a device replacement success response message to the second terminal and/or the control device.

In an implementation, the management server is a local management server or a remote cloud server.

According to a second aspect, a device replacement configuration method is provided. The method includes: A second terminal sends request information to a management server, where the request information indicates to obtain device registration information allocated by the management server to a first terminal, and the second terminal is configured to replace the first terminal; and the second terminal obtains the device registration information of the first terminal from the management server.

In an implementation, the request information includes an identifier of the second terminal, or the request information includes an identifier of the first terminal.

In an implementation, the identifier of the terminal includes a device serial number SN and/or physical media access control address MAC information.

In an implementation, if the request information includes the identifier of the first terminal, before the second terminal sends the request information to the management server, the method further includes: receiving a replacement request from a control device, where the replacement request includes the identifier of the first terminal, and indicates to request to replace the first terminal.

In an implementation, the request information is device registration request information or device replacement request information.

In an implementation, the first terminal and the second terminal are terminal devices of a same type, or terminal devices having a same function, or terminal devices of a same device model; or the first terminal and the second terminal are a same terminal device, where the second terminal refers to a state of the first terminal on which fault repair is performed.

In an implementation, the method further includes: receiving a device replacement success response message from the management server.

In an implementation, the management server is a local management server or a remote cloud server.

According to a third aspect, a device replacement configuration method is provided. The method includes: A management server receives request information from a second terminal, where the request information indicates to obtain device registration information allocated by the management server to a first terminal, and the second terminal is configured to replace the first terminal; and the management server sends the device registration information of the first terminal to the second terminal based on the request information.

In an implementation, the request information includes an identifier of the second terminal.

In an implementation, before the receiving request information from a second terminal, the method further includes: A replacement request is received from a control device, where the replacement request includes an identifier of the first terminal, and indicates to implement device replacement for the first terminal; and the management server generates corresponding verification information based on the replacement request, and sends the verification information to the control device.

In an implementation, the method further includes: receiving replacement information from the control device, where the replacement information includes the identifier of the second terminal and the verification information, and indicates the second terminal to replace the first terminal; and the management server performs identity authentication based on the verification information, and stores a replacement relationship between the first terminal and the second terminal if the authentication succeeds.

In an implementation, that the management server sends the device registration information of the first terminal to the second terminal based on the request information specifically includes: The management server obtains the device registration information of the first terminal based on the identifier of the second terminal that is included in the request information and the replacement relationship between the second terminal and the first terminal, and sends the device registration information of the first terminal to the second terminal.

In an implementation, the request information is device registration request information.

In an implementation, the request information includes the identifier of the first terminal.

In an implementation, before the management server receives the request information from the second terminal, the method further includes: The management server receives the identifier of the second terminal; and the management server performs identity authentication on the second terminal, and stores the identifier of the second terminal if the authentication succeeds.

In an implementation, that the management server sends the device registration information of the first terminal to the second terminal based on the request information specifically includes: The management server obtains the device registration information of the first terminal based on the identifier of the first terminal that is included in the request information, and sends the device registration information of the first terminal to the second terminal.

In an implementation, the request information is device registration request information or device replacement request information.

In an implementation, the identifier of the terminal includes a device serial number SN and/or physical media access control address MAC information.

In an implementation, the first terminal and the second terminal are terminal devices of a same type, or terminal devices having a same function, or terminal devices of a same device model; or the first terminal and the second terminal are a same terminal device, where the second terminal refers to a state of the first terminal on which fault repair is performed.

In an implementation, the method further includes: The management server sends a device replacement success response message to the second terminal and/or the control device.

In an implementation, the management server is a local management server or a remote cloud server.

According to a fourth aspect, a device replacement configuration method is provided. The method includes: In response to a device replacement operation of a user, a control device sends a replacement request to a management server, where the replacement request includes an identifier of a first terminal, and indicates to implement device replacement for the first terminal; and the control device determines a second terminal, where the second terminal is configured to replace the first terminal.

In an implementation, the method further includes: The control device receives verification information from the management server; and the control device sends replacement information to the management server, where the replacement information includes an identifier of the second terminal and the verification information, and indicates that the second terminal is configured to replace the first terminal.

In an implementation, the identifier of the terminal includes a device serial number SN and/or physical media access control address MAC information.

In an implementation, the first terminal and the second terminal are terminal devices of a same type, or terminal devices having a same function, or terminal devices of a same device model; or the first terminal and the second terminal are a same terminal device, where the second terminal refers to a state of the first terminal on which fault repair is performed.

In an implementation, the method further includes: receiving a device replacement success response message sent by the management server.

In an implementation, the management server is a local management server or a remote cloud server.

According to a fifth aspect, a communication apparatus is provided, and may implement the method performed by the second terminal according to any one of the second aspect or the possible implementations of the second aspect. The apparatus includes a corresponding unit or component configured to perform the foregoing method. The unit included in the apparatus may be implemented in a software and/or hardware manner.

According to a sixth aspect, a communication apparatus is provided, and may implement the method performed by the management server according to any one of the third aspect or the possible implementations of the third aspect. The apparatus includes a corresponding unit or component configured to perform the foregoing method. The unit included in the apparatus may be implemented in a software and/or hardware manner.

According to a seventh aspect, a communication apparatus is provided, and may implement the method performed by the control device according to any one of the fourth aspect or the possible implementations of the second aspect. The apparatus includes a corresponding unit or component configured to perform the foregoing method. The unit included in the apparatus may be implemented in a software and/or hardware manner.

According to an eighth aspect, a communication system is provided. The communication system includes a first terminal, a second terminal, and a management server, where the second terminal is configured to send request information to the management server, the request information indicates to obtain device registration information allocated by the management server to the first terminal, the second terminal is configured to replace the first terminal; and the management server is configured to send the device registration information of the first terminal to the second terminal based on the request information.

In an implementation, the communication system further includes a control device, where the control device is configured to send, in response to a device replacement operation of a user, a replacement request to the management server, where the replacement request includes an identifier of the first terminal, and indicates to implement device replacement for the first terminal.

In an implementation, the control device is further configured to send replacement information to the management server, where the replacement information includes an identifier of the second terminal and the verification information, and indicates that the second terminal is configured to replace the first terminal.

**In** an implementation, the request information includes the identifier of the first terminal or the identifier of the second terminal.

**In** an implementation, the communication system may include the communication apparatus according to the fifth aspect, the communication apparatus according to the sixth aspect, and the communication apparatus according to the seventh aspect. The communication system may be configured to implement the method according to any one of the first aspect or the possible implementations of the first aspect.

According to a ninth aspect, an electronic device is provided. The electronic device includes a memory and one or more processors, the memory is coupled to the processor, the memory is configured to store computer program code, the computer program code includes computer instructions, and when the processor executes the computer instructions, the electronic device is configured to perform the method according to any implementation of the second aspect.

According to a tenth aspect, an electronic device is provided. The electronic device includes a memory and one or more processors, the memory is coupled to the processor, the memory is configured to store computer program code, the computer program code includes computer instructions, and when the processor executes the computer instructions, the electronic device is configured to perform the method according to any implementation of the third aspect.

According to an eleventh aspect, an electronic device is provided. The electronic device includes a memory and one or more processors, the memory is coupled to the processor, the memory is configured to store computer program code, the computer program code includes computer instructions, and when the processor executes the computer instructions, the electronic device is configured to perform the method according to any implementation of the fourth aspect.

According to a twelfth aspect, an embodiment of this application provides a computer-readable medium. The computer-readable medium stores a computer program or instructions, and when the computer program or the instructions are executed, a computer is enabled to perform the method according to any one of the second aspect or the possible implementations of the second aspect.

According to a thirteenth aspect, an embodiment of this application provides a computer-readable medium. The computer-readable medium stores a computer program or instructions, and when the computer program or the instructions are executed, a computer is enabled to perform the method according to any one of the third aspect or the possible implementations of the third aspect.

According to a fourteenth aspect, an embodiment of this application provides a computer-readable medium. The computer-readable medium stores a computer program or instructions, and when the computer program or instructions are executed, a computer is enabled to perform the method according to any one of the fourth aspect or the possible implementations of the fourth aspect.

According to a fifteenth aspect, an embodiment of this application provides a computer program product. The computer program product includes computer program code, and when the computer program code is run on a computer, the computer is enabled to perform the method according to any one of the second aspect or the possible implementations of the second aspect.

According to a sixteenth aspect, an embodiment of this application provides a computer program product. The computer program product includes computer program code, and when the computer program code is run on a computer, the computer is enabled to perform the method according to any one of the third aspect or the possible implementations of the third aspect.

According to a seventeenth aspect, an embodiment of this application provides a computer program product. The computer program product includes computer program code, and when the computer program code is run on a computer, the computer is enabled to perform the method according to any one of the fourth aspect or the possible implementations of the fourth aspect.

According to an eighteenth aspect, an embodiment of this application provides a chip system. The chip system is used in an electronic device. The chip system includes one or more interface circuits and one or more processors. The interface circuit and the processor are interconnected through a line. The interface circuit is configured to: receive a signal from a memory of the electronic device, and send the signal to the processor. The signal includes computer instructions stored in the memory. When the processor executes the computer instructions, the chip system implements the method according to any one of the second aspect or the possible implementations of the second aspect.

According to a nineteenth aspect, an embodiment of this application provides a chip system. The chip system is used in an electronic device. The chip system includes one or more interface circuits and one or more processors. The interface circuit and the processor are interconnected through a line. The interface circuit is configured to: receive a signal from a memory of the electronic device, and send the signal to the processor. The signal includes computer instructions stored in the memory. When the processor executes the computer instructions, the chip implements the method according to any one of the third aspect or the possible implementations of the third aspect.

According to a twentieth aspect, an embodiment of this application provides a chip system. The chip system is used in an electronic device. The chip system includes one or more interface circuits and one or more processors. The interface circuit and the processor are interconnected through a line. The interface circuit is configured to: receive a signal from a memory of the electronic device, and send the signal to the processor. The signal includes computer instructions stored in the memory. When the processor executes the computer instructions, the chip implements the method according to any one of the fourth aspect or the possible implementations of the fourth aspect.

It may be understood that any communication apparatus, electronic device, chip system, computer-readable medium, computer program product, communication system, or the like provided above is configured to perform the corresponding method provided above. Therefore, for beneficial effect that can be achieved by the communication apparatus, the chip, the computer-readable medium, the computer program product, the communication system, or the like, refer to beneficial effect in the corresponding method. Details are not described herein.

### BRIEF DESCRIPTION OF DRAWINGS

FIG. 1a is a diagram of an architecture of a communication system according to an embodiment of this application;
FIG. 1b is a diagram of a hardware structure of a terminal device according to an embodiment of this application;
FIG. 2 is a diagram of a software structure of a terminal device according to an embodiment of this application;
FIG. 3 is a schematic flowchart of a device replacement configuration method according to an embodiment of this application;
FIG. 4A, FIG. 4B, and FIG. 4C are a diagram of display effect of device replacement according to an embodiment of this application;
FIG. 5A, FIG. 5B, and FIG. 5C are another diagram of display effect of device replacement according to an embodiment of this application;
FIG. 6 is a schematic flowchart of another device replacement configuration method according to an embodiment of this application;
FIG. 7 is a schematic flowchart of another device replacement configuration method according to an embodiment of this application; and
FIG. 8 is a diagram of a structure of an electronic device according to an embodiment of this application.

### DESCRIPTION OF EMBODIMENTS

The terms "first" and "second" mentioned below are only intended for a purpose of description, and shall not be understood as an indication or implication of relative importance or implicit indication of a quantity of indicated technical features. Therefore, a feature limited by "first" or "second" may explicitly or implicitly include one or more features. In the description of embodiments, unless otherwise specified, "a plurality of" means two or more.

It should be noted that, in this application, the terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

The following clearly and completely describes the technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

First, an implementation environment and an application scenario of embodiments of this application are briefly described.

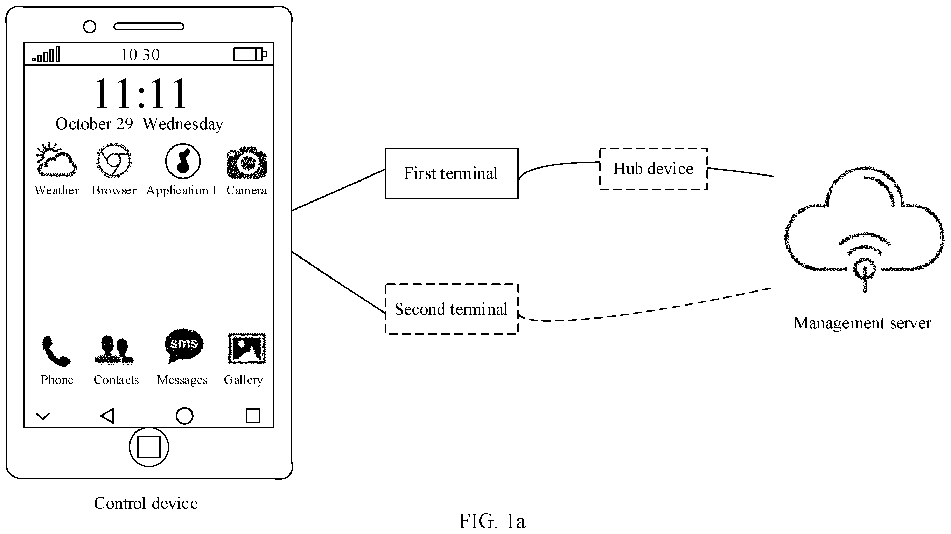

Embodiments of this application may be applied to the communication system shown in FIG. 1a, and mainly include a control device, at least one terminal device, and a management server. For example, the at least one terminal device may include a first terminal and a second terminal.

The control device is a device that implements control on network access registration, use management, device deregistration, or the like of the terminal device. In an implementation, the control device may be specifically a terminal device or a remote control, for example, a smartphone or a smart home controller.

In an implementation, a user may control, by using an application (Application, APP) installed on the control device, the terminal device accessing a network. For example, in the field of smart home, an application on a smartphone may be used to control a smart home or a smart appliance that accesses a home gateway, for example, control a curtain to be turned on or off, control a water heater to be turned on, and set a heating temperature.

The terminal device is a device, an apparatus, or a machine that has a computing processing capability. In embodiments of this application, the terminal device may be a device or an intelligent terminal that has a data processing capability or a functional peripheral, various sensors, internet of things terminal devices, or the like. The terminal device may also be referred to as user equipment (user equipment, UE), a mobile station, a mobile terminal, a terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart home, a smart office, a smart wearable, smart transportation, and a smart city. The terminal may be a mobile phone, a tablet computer, a computer with a wireless transceiver function, a wearable device, a vehicle-mounted terminal, a robot, a robotic arm, a smart home device, or the like. A specific technology and a specific device form used by the terminal are not limited in embodiments of this application.

The management server is configured to store configuration information of each terminal device, and may be further configured to store configuration information of an application, a multimedia resource, and the like. The terminal device may obtain, by exchanging information with the management server, a data packet for loading the application, and configuration information or multimedia information of the application, and the like.

It should be noted that the foregoing management server may be a physical server, or may be a virtual server or a cloud server, for example, an edge cloud or a remote cloud. The terminal device and the cloud server may form an end-cloud communication network architecture.

Functions of the management server may be configured on one server, or may be implemented by using a plurality of servers. This is not specifically limited in embodiments of this application.

In an implementation, a hub device may be included in the communication system, and is configured to implement a management function of a local device. Optionally, the hub device may be further configured to implement an edge computing function, for example, the edge cloud, and may form an end-edge-cloud communication network architecture with the terminal device and the cloud server.

In an implementation scenario of this application, when a terminal device in the communication system is faulty or needs to be replaced with a new terminal device due to another reason, the user may replace the old terminal device with a terminal device of a same type or with a same function, and re-access the communication system by using the new terminal device. Alternatively, in another implementation scenario, the device is repaired after a fault occurs, and after the repair, the device may be used as a new terminal device to access the communication system again.

This application provides a device replacement configuration method. A device replacement procedure is completed in a new device network configuration and access process, so that authentication information of a device does not change before and after the device replacement. In other words, after the new device replaces the old device, device registration information corresponding to the new device is still the same as device registration information of the old device. For the new device, a device replacement process is a common network configuration and binding process, and the new device inherits the device registration information of the old device. Therefore, the device replacement process is not sensed in most services in the communication system. The method can improve device replacement efficiency, simplify a device replacement procedure, and ensure service continuity.

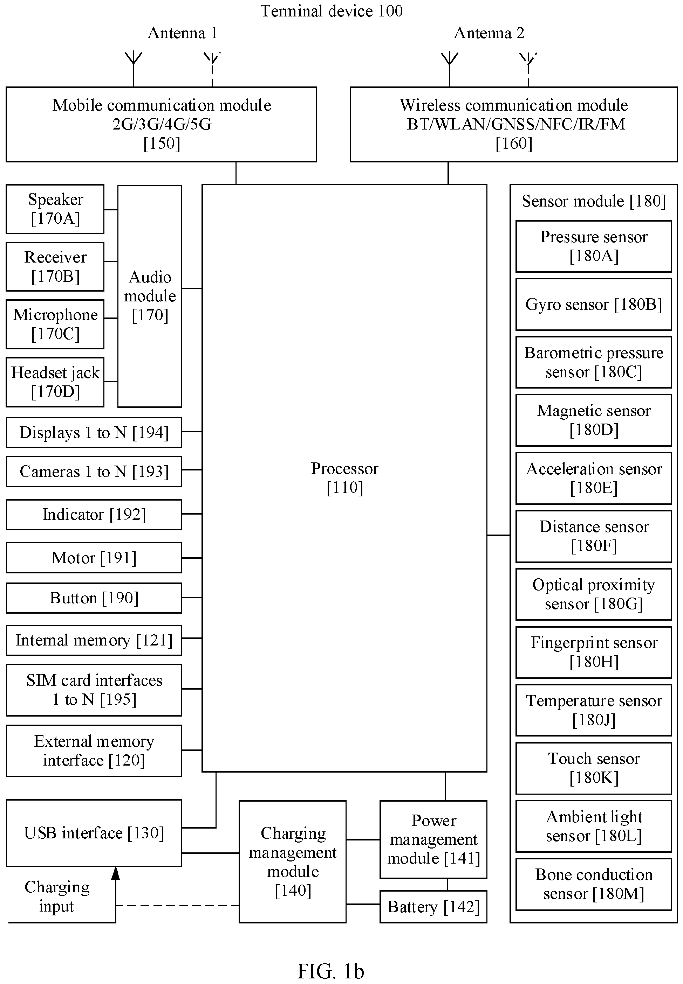

FIG. 1b is a diagram of a structure of a terminal device 100. In an implementation, for a structure of the control device or the management server, refer to the structure shown in FIG. 1b. It may be understood that the structure shown in this embodiment of the present invention does not constitute a specific limitation on the terminal device, the control device, or the management server. In some other embodiments of this application, the terminal device 100 may include more or fewer components than those shown in the FIG. 1b, or a combination of a part of the components, or splits from a part of the components, or an arrangement of different components. The components shown in the figure may be implemented by hardware, software, or a combination of software and hardware.

The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the terminal device 100. The controller may generate an operation control signal based on an instruction operation code and a time sequence signal, to complete control of instruction fetching and instruction execution.

A memory may be disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal device 100. The processor 110 communicates with the display 194 through the DSI interface, to implement a display function of the terminal device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, the UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the terminal device 100, or may be configured to transmit data between the terminal device 100 and a peripheral device, or may be configured to connect to a headset for playing audio through the headset. Alternatively, the port may be configured to connect to another electronic device, for example, an AR device.

It may be understood that an interface connection relationship between the modules shown in this embodiment of the present invention is only an example for description, and does not constitute a limitation on the structure of the terminal device 100. In some other embodiments of this application, different interface connection manners in the foregoing embodiments or a combination of a plurality of interface connection manners may alternatively be used for the terminal device 100.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal device 100. The charging management module 140 supplies power to the electronic device through the power management module 141 while charging the battery 142.

The power management module 141 is configured to connect to the battery 142, the charging management module 140, and the processor 110. The power management module 141 receives inputs of the battery 142 and/or the charging management module 140, to supply power to the processor 110, the internal memory 121, an external memory, the display 194, the camera 193, the wireless communication module 160, and the like. The power management module 141 may be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the terminal device 100 and that is used for 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology and that is applied to the terminal device 100. The wireless communication module 160 may be one or more devices integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a Mini-LED, a Micro-LED, a Micro-OLED, a quantum dot light emitting diode (quantum dot light emitting diode, QLED), or the like. In some embodiments, the terminal device 100 may include one or N displays 194, where N is a positive integer greater than 1.

The terminal device 100 may implement a photographing function via the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal device 100 may include one or N cameras 193, where N is a positive integer greater than 1.

The digital signal processor is configured to process a digital signal, and may further process another digital signal in addition to the digital image signal. For example, when the terminal device 100 selects a frequency, the digital signal processor is configured to perform Fourier transformation on frequency energy.

The video codec is configured to compress or decompress a digital video. The terminal device 100 may support one or more video codecs. Therefore, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information with reference to a structure of a biological neural network, for example, a transfer mode between human brain neurons, and may further continuously perform self-learning. Applications such as intelligent cognition of the terminal device 100, for example, image recognition, facial recognition, voice recognition, and text understanding, can be implemented by using the NPU.

The external memory interface 120 may be configured to connect to an external storage card, for example, a micro SD card, to extend a storage capability of the terminal device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the terminal device 100. The internal memory 121 may include a program storage area and a data storage area. The program storage area may store an operating system, an application required by at least one function (for example, a voice playing function or an image playing function), and the like. The data storage area may store data (for example, audio data or an address book) created in a process of using the terminal device 100, and the like. In addition, the internal memory 121 may include a high-speed random access memory, or may include a nonvolatile memory, for example, at least one magnetic disk storage device, a flash memory, or a universal flash storage (universal flash storage, UFS).

The terminal device 100 may implement an audio function, for example, music playing or recording, via the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal device 100 may be configured to listen to music or answer a call in a hands-free mode over the speaker 170A.

The receiver 170B, also referred to as an "earpiece", is configured to convert an electrical audio signal into a sound signal. When a call is answered or voice information is received by using the terminal device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100, to implement a noise reduction function in addition to collecting a sound signal. In some other embodiments, three, four, or more microphones 170C may alternatively be disposed in the terminal device 100, to collect a sound signal, implement noise reduction, and identify a sound source, to implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines pressure intensity based on a capacitance change. When a touch operation is performed on the display 194, the terminal device 100 detects intensity of the touch operation through the pressure sensor 180A. The terminal device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an application icon of Messages, an instruction for viewing an SMS message is performed. When a touch operation whose touch operation intensity is greater than or equal to the first pressure threshold is performed on the application icon of Messages, an instruction for creating an SMS message is performed.

The gyro sensor 180B may be configured to determine a motion posture of the terminal device 100. In some embodiments, an angular velocity of the terminal device 100 around three axes (that is, axes x, y, and z) may be determined by using the gyro sensor 180B. The gyro sensor 180B may be configured to implement image stabilization during photographing. For example, when the shutter is pressed, the gyro sensor 180B detects an angle at which the terminal device 100 jitters, calculates, based on the angle, a distance for which a lens module needs to compensate, and allows the lens to cancel the jitter of the terminal device 100 through reverse motion, to implement image stabilization. The gyro sensor 180B may also be used in a navigation scenario and a motion-sensing game scenario.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall sensor. The terminal device 100 may detect opening and closing of a flip leather case by using the magnetic sensor 180D. In some embodiments, when the terminal device 100 is a flip phone, the terminal device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations of the terminal device 100 in various directions (usually along the three axes). When the terminal device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The terminal device 100 may measure the distance in an infrared manner or a laser manner. In some embodiments, in a photographing scenario, the terminal device 100 may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The terminal device 100 emits infrared light by using the light-emitting diode. The terminal device 100 detects infrared reflected light from a nearby object by using the photodiode. When sufficient reflected light is detected, it may be determined that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear to make a call, to automatically perform screen-off for power saving. The optical proximity sensor 180G may also be used for automatically unlocking or locking a screen in leather case mode or pocket mode.

The ambient light sensor 180L is configured to sense ambient light brightness. The terminal device 100 may adaptively adjust brightness of the display 194 based on the sensed ambient light brightness. The ambient light sensor 180L may also be configured to automatically adjust a white balance during photographing. The ambient light sensor 180L may further cooperate with the optical proximity sensor 180G to detect whether the terminal device 100 is in a pocket, to avoid an accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy based on the temperature detected by the temperature sensor 180J. For example, when the temperature reported by the temperature sensor 180J exceeds a threshold, the terminal device 100 lowers performance of a processor near the temperature sensor 180J, to reduce power consumption and implement thermal protection. In some other embodiments, when the temperature is less than another threshold, the terminal device 100 heats the battery 142 to avoid abnormal shutdown of the terminal device 100 due to a low temperature. In some other embodiments, when the temperature is less than still another threshold, the terminal device 100 boosts an output voltage of the battery 142, to avoid abnormal shutdown due to a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the terminal device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal device 100 may receive a button input, and generate a button signal input related to a user setting and function control of the terminal device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 can support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 is also compatible with an external storage card. The terminal device 100 interacts with a network by using the SIM card, to implement functions such as conversation and data communication. In some embodiments, an eSIM, namely, an embedded SIM card, is used for the terminal device 100. The eSIM card may be embedded into the terminal device 100, and cannot be separated from the terminal device 100.

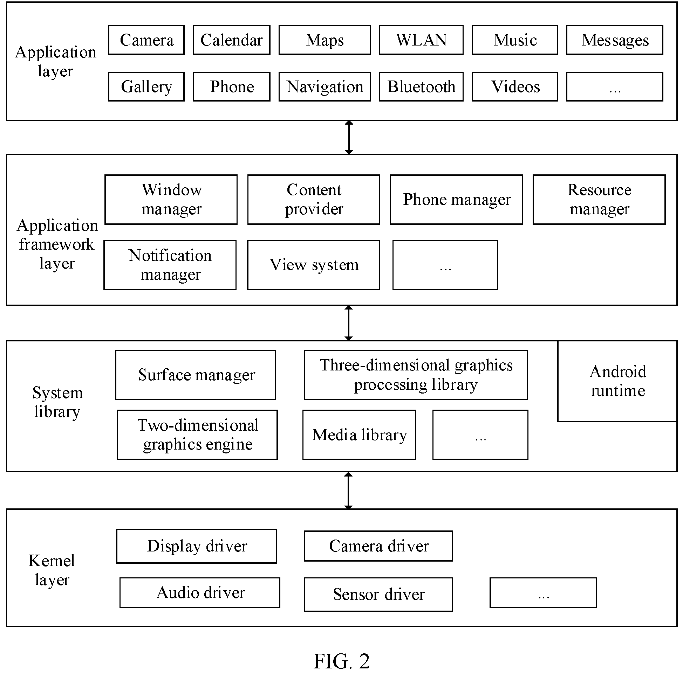

FIG. 2 is a block diagram of a software structure of a terminal device 100 according to an embodiment of this application.

A layered architecture, an event-driven architecture, a microkernel architecture, a micro service architecture, or a cloud architecture may be used for a software system of the terminal device 100. In this embodiment of this application, an Android system with a layered architecture is used as an example to illustrate a software structure of the terminal device 100.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, an application package may include applications such as Camera, Gallery, Calendar, Phone, Maps, Navigation, WLAN, Bluetooth, Music, Videos, and Messages.

In an implementation, the application package may include an application such as data backup, data restoration, or "mobile phone clone", and is used to implement subscriber data backup and restoration. This is described with reference to a specific embodiment subsequently, and details are not described herein.

In another implementation, an operating system of the terminal device 100 may further include a backup system, configured to implement data backup and data restoration. This is described with reference to a specific embodiment subsequently, and details are not described herein.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a notification icon of Messages may include a text display view and an image display view.

The phone manager is configured to provide a communication function for the terminal device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of a system in a form of a graph or a scroll bar text, for example, a notification of an application that is run on a background, or may be a notification that appears on a screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

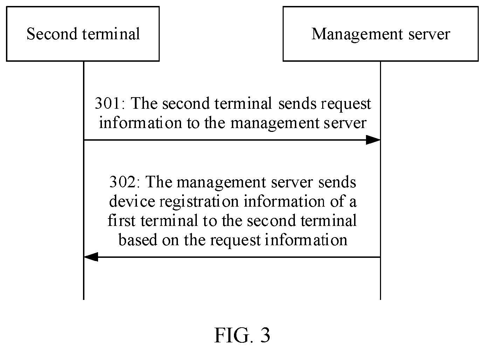

With reference to the foregoing content, this application provides a device replacement configuration method, and the method is applied to a communication system including a first terminal, a second terminal, a control device, a management server, and the like. The first terminal may be a replaced terminal device, namely, an old device, and the second terminal may be a terminal device for replacement, namely, a new device. As shown in FIG. 3, the method may include the following steps.

301: A second terminal sends request information to a management server.

The request information may indicate to obtain device registration information allocated by the management server to a first terminal, where the second terminal is configured to replace the first terminal. In other words, the second terminal may request the management server to allocate the device registration information of the old device, namely, the first terminal, to implement device replacement and keep consistency between the device registration information of the old device and device registration information of a new device.

In an implementation, the request information may be specifically the device registration information, that is, the new device for replacement may trigger a device registration procedure, and implement, in a procedure of interacting with the server, a registration procedure of the new device and a process of replacing the old device with the new device.

In another implementation, the request information may alternatively be device replacement information, that is, new request information such as the device replacement information may be extended to indicate the management server to perform a device replacement procedure, and the new device for replacement may replace the old device in a procedure of interacting with the management server by triggering the device replacement procedure.

It should be noted that the device replacement procedure may be triggered by a user via the control device, or may be triggered by a user by using the first terminal or the second terminal. A specific implementation process of triggering device replacement is not limited in this application. The following uses an example in which the user triggers device replacement via the control device for description. A specific interaction process is described below, and details are not described herein.

302: The management server sends the device registration information of the first terminal to the second terminal based on the request information.

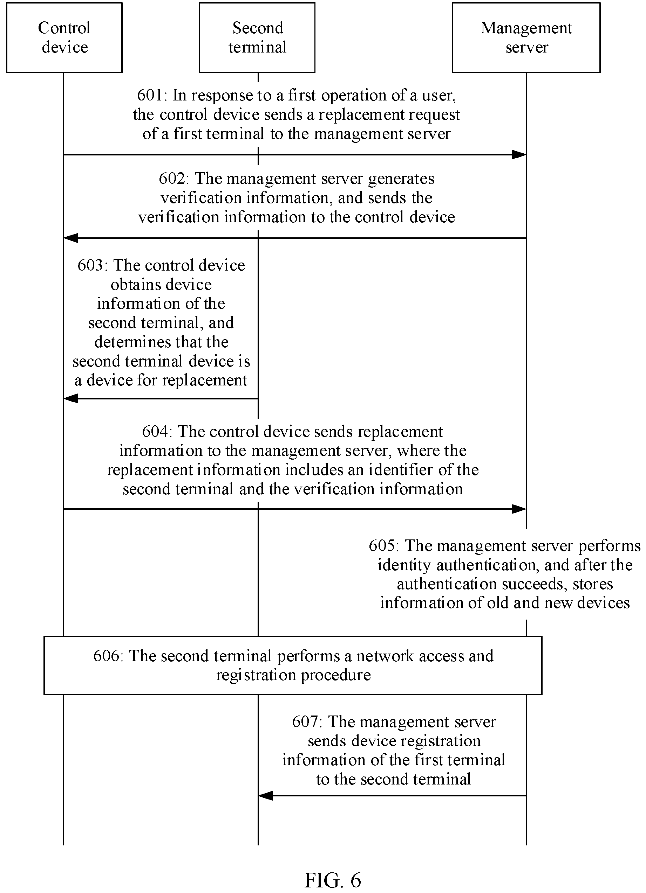

In an implementation, the request information sent by the second terminal to the management server may include an identifier of the second terminal, so that the management server may determine, based on the identifier of the second terminal and a previously stored identifier of the first terminal, that an old device that needs to be replaced by the second terminal is the first terminal, to obtain, through an inquiry, the device registration information allocated by the management server to the first terminal, and send the device registration information of the first terminal to the second terminal. A detailed implementation process is described below with reference to FIG. 6, and details are not described herein.

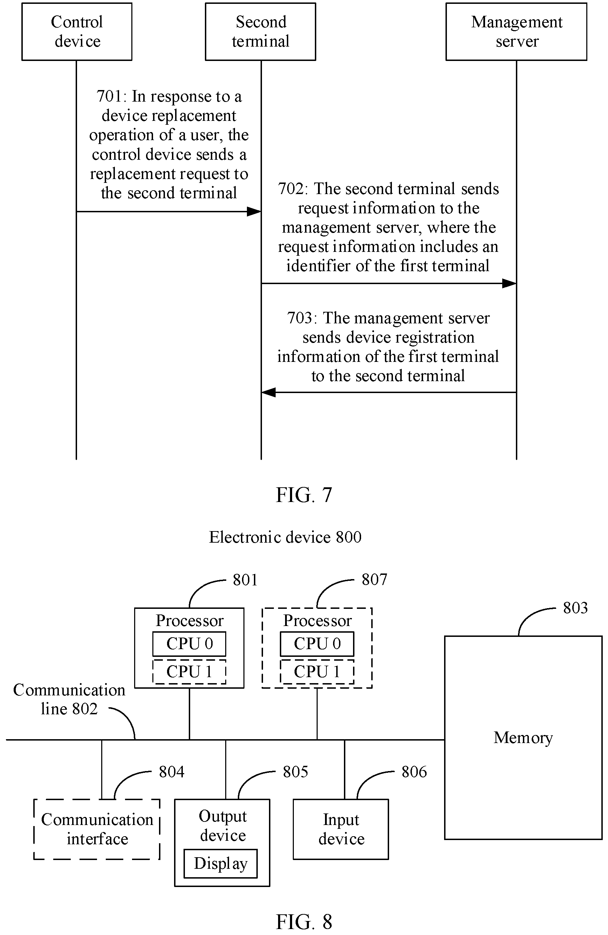

In another implementation, the request information sent by the second terminal to the management server may include the identifier of the first terminal, so that the management server may determine, based on the identifier of the first terminal and the stored identifier of the second terminal, that the new device for replacement for the first terminal is the second terminal, to obtain, through an inquiry, the device registration information allocated by the management server to the first terminal, and send the device registration information of the first terminal to the second terminal. A detailed implementation process is described below with reference to FIG. 7, and details are not described herein.

The device registration information is allocated by the management server to the terminal device that requests registration, and is used to manage and control the corresponding terminal device based on the device registration information. Therefore, the device registration information of the second terminal refers to device registration information allocated by the management server to the second terminal, and the device registration information corresponding to the first terminal refers to information that is allocated by the management server to the first terminal in a registration process of the first terminal. In other words, the management server may deliver the previously stored device registration information of the first terminal as the device registration information of the second terminal to the second terminal, so that the device registration information of the second terminal is the same as the device registration information of the first terminal, that is, after the old device is replaced with the new device, the same device registration information is still kept.

With reference to a specific implementation, the following describes the device replacement method provided in this application by using an example in which the control device is a smartphone and an application, for example, a first application, having a terminal device management function is installed on the control device.

With reference to FIG. 3, before step 301, the method may further include the following steps.

Step 1: The control device receives a first operation of the user.

The first operation may be an operation for the user to indicate the control device to perform device replacement.

In an implementation, the user may view and manage, via the control device, each terminal device that accesses the network. For example, by using an application APP, for example, a first application installed on the control device, information such as identifiers, device statuses, and device configuration of a plurality of terminal devices that access the network may be presented to the user. In addition, the user may further manage each terminal device by using the APP installed on the control device, for example, perform operations such as binding, setting, replacing, or deregistering the terminal device.

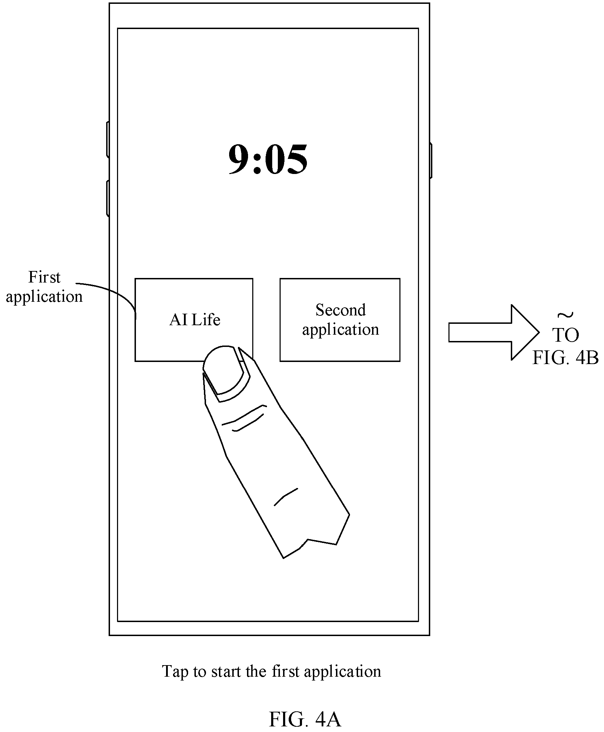

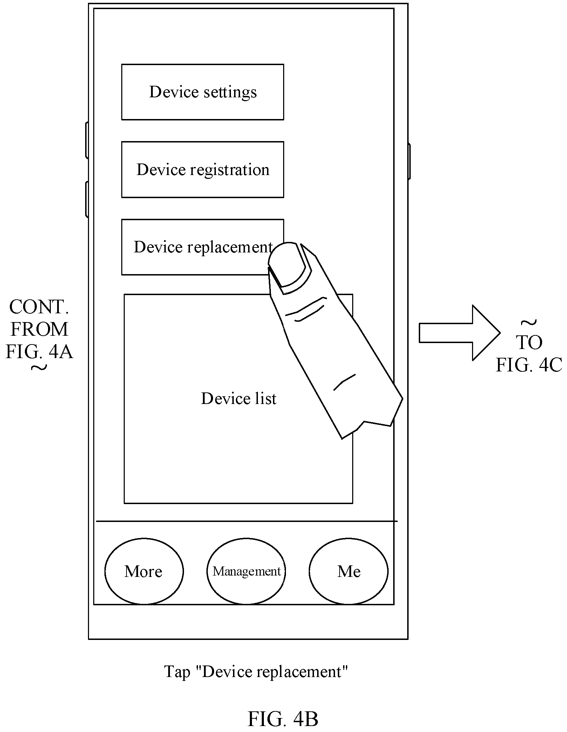

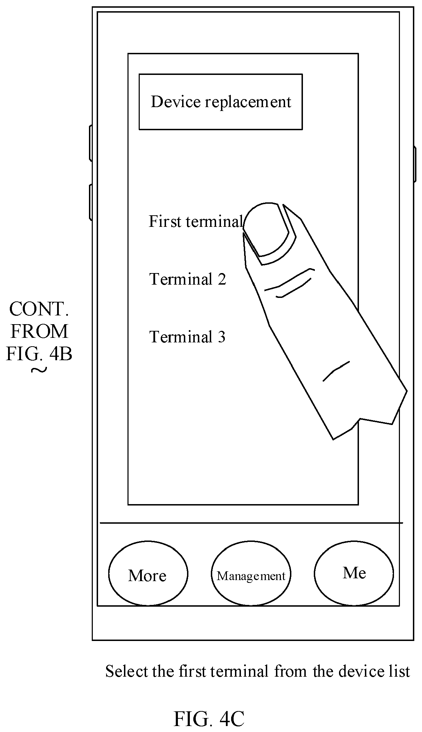

For example, as shown in FIG. 4A, FIG. 4B, and FIG. 4C, the control device is a smartphone, and the first application for managing and controlling the terminal device is installed on the control device. The user may start the first application on the smartphone, and tap a device changing or device replacement operation icon to request to perform a terminal device replacement procedure. For example, the first terminal may be selected from a device list for device replacement, to determine to perform a device replacement procedure on the first terminal. The foregoing operation sequence may be collectively referred to as a first operation.

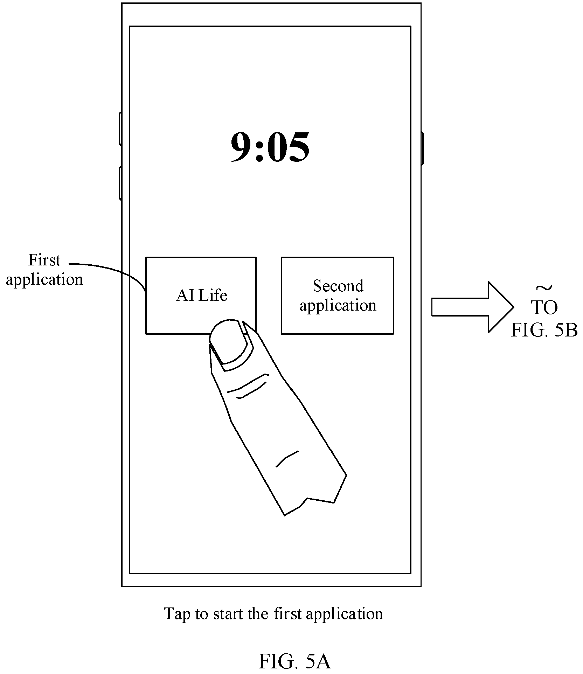

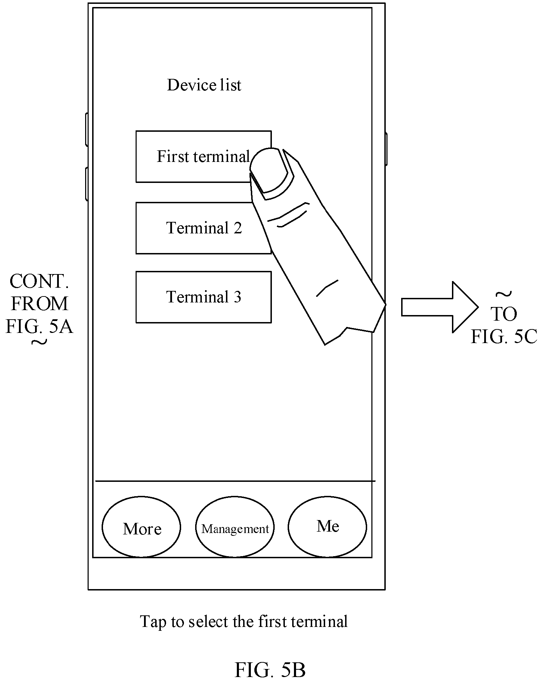

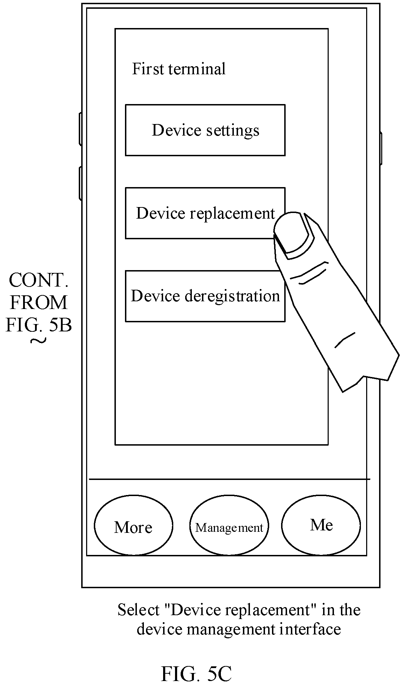

In another implementation, as shown in FIG. 5A, FIG. 5B, and FIG. 5C, the control device is a smartphone. The user may start a first application on the smartphone, select a first terminal from a plurality of management devices, and then select "Device replacement" in a management interface of the first terminal, to start a device replacement procedure of the first terminal. The foregoing operation sequence may be collectively referred to as a first operation. A specific implementation process in which the user triggers the terminal device replacement procedure by the control device is not limited in this application.

Step 2: The control device triggers a replacement request of the first terminal.

The control device responds to the first operation of the user, and if the first operation is used to request to perform device replacement for the first terminal, the control device triggers the replacement request of the first terminal.

In an implementation, that the control device triggers the replacement request of the first terminal may specifically include: The control device sends the replacement request to a management server, where the replacement request may carry an identifier of the first terminal, for example, device information. Correspondingly, the management server receives the replacement request from the control device, and determines that a device replacement procedure needs to be performed for the first terminal.

In an implementation, an identifier of the terminal device may specifically include a device serial number (serial number, SN) of the terminal device, to uniquely identify one terminal device. Alternatively, the identifier of the terminal device may further include physical media access control address (Media Access Control Address, MAC) information that is configured for the terminal device before delivery.

In an implementation, the control device may be a smartphone, and is configured to manage and control one or more terminal devices that access a network. The management server may be the hub device shown in FIG. 1a, or may be a cloud server.

Step 3: The control device determines that the second terminal device is a device for replacement.

The control device may select and determine that the device for replacement is the second terminal, that is, determine that the new device used to replace an old device is the second terminal.

In an implementation, the new device (which is also referred to as the device for replacement) and the old device (which is also referred to as the replaced device) that perform the device replacement procedure may be terminal devices having a same function. Specifically, the new device and the old device may be terminal devices of a same type, or optionally, the new device and the old device may be terminal devices of a same device model, so that the new device may be configured to implement a same function or service as the old device. In other words, the first terminal and the second terminal have a same function, for example, are terminal devices of a same type or terminal devices of a same device model.

In addition, the first terminal and the second terminal may be a same terminal device, where the second terminal refers to a state of the first terminal on which fault repair is performed. In other words, this application is not only applicable to an implementation scenario in which an old device is replaced with a new device, but also applicable to a scenario in which a device re-accesses a network after the device is repaired due to a fault.

Then, the control device may obtain an identifier, for example, device information, of the second terminal used to replace the old device.

In an implementation, the user may scan the second terminal for replacement by using the APP on the control device, to obtain the identifier of the second terminal for replacement. For example, the control device may scan a random QR code generated by the second terminal, where the QR code carries the identifier of the second terminal.

It can be learned from the foregoing content that optionally, the identifier of the second terminal may include an SN and/or a MAC address, and the like.

After determining that the second terminal device is the device for replacement, the control device may perform a device registration procedure of the second terminal and the device replacement procedure of the second terminal by interacting with the management server, to obtain device registration information of the second terminal.

Step 4: The control device sends replacement information to the management server.

The replacement information includes the identifier of the second terminal, and indicates that the second terminal is configured to replace the first terminal.

In an implementation, the management server may perform identity authentication on the control device, to ensure security of the replacement information. The following describes possible implementations of identity authentication with reference to embodiments. Details are not described herein.

Step 5: The management server stores a replacement relationship between the first terminal and the second terminal.

Therefore, when the second terminal subsequently performs step 301 to send the request information to the management server, the management server may determine, based on the identifier of the second terminal that is carried in the request information, that a replacement relationship exists between the second terminal and the first terminal, to obtain device registration information of the first terminal, and send the device registration information of the first terminal to the second terminal.

Device replacement is performed in the foregoing implementation provided in this application. For a new device, device replacement is implemented in a network access and registration procedure of the device. The new device does not sense a replacement process, and the new device does not need to perform system upgrade to match the replacement procedure. Therefore, the device replacement procedure is simple. In addition, in the foregoing implementation of this application, the device registration information of the new device is the same as the device registration information of the old device, so that the new device can inherit a setting performed by the user on the old device and service continuity, and the user does not need to reconfigure the new device. Therefore, device replacement efficiency in this application is higher than that in the conventional technology, and user experience is improved.

In addition, for a data processing center such as a cloud server or a hub device, there is no need to store two pieces of device registration information: device registration information of a new device for replacement and device registration information of a replaced old device. The device registration information of the new device is the same as the device registration information of the old device. Therefore, operations such as data analysis and data statistics collection performed based on the device registration information are not affected by the device replacement procedure. The replacement process is not sensed in most functions and services. This ensures service continuity and reduces service complexity caused by device replacement.

The following describes a specific implementation process of device replacement with reference to an interaction procedure between the control device and the second terminal and the management server. As shown in FIG. 6, the method may include the following steps.

601: In response to a first operation of a user, a control device sends a replacement request to a management server.

The replacement request includes an identifier of a first terminal, and indicates to request to implement device replacement for the first terminal.

602: The management server generates verification information, and sends the verification information to the control device.

The management server stores the identifier of the replaced device, namely, the first terminal based on the received replacement request of the control device, and generates the corresponding verification information, and the information is used to perform identity authentication on a requested device replacement operation in a device replacement procedure.

Correspondingly, the control device receives the verification information from the management server. After selecting and determining that a terminal device for replacement (which may also be referred to as a new device) is a second terminal, the user may send an identifier of the second terminal and the verification information to the management server based on the obtained identifier of the second terminal, and request the management server to perform device replacement for the first terminal.

In an implementation, there may be a specific limit duration for the verification information or information of the replaced device that is stored on the management server. When the duration is reached or exceeded, the management server may delete the stored verification information or the information of the replaced device.

For example, the management server may perform management via a timer. If the management server determines that the timer expires, the management server may clear a stored replacement verification code or the information of the replaced device. Optionally, in this implementation scenario, the management server may notify the control device that the device replacement procedure times out, and a corresponding APP on the control device may display timeout, indicating that the current device replacement operation times out. Therefore, the user may initiate a device replacement procedure again according to a requirement, to perform device replacement for the first terminal.

603: The control device obtains the identifier of the second terminal, and determines that the second terminal device is a device for replacement.

After obtaining the verification information of the management server, the control device may select and determine that the device for replacement is the second terminal, that is, determine a new device used to replace an old device.

In an implementation, the second terminal may establish a communication connection to the control device through a hotspot. For example, the second terminal generates a hotspot, and broadcasts hotspot information, and the control device may communicate with the second terminal by accessing the hotspot. Optionally, the second terminal may further send information such as a binding portal of the device and a device type to the control device.

For example, after the control device determines that the second terminal device is the device for replacement, the user may select, on an APP on the control device, the second terminal as the device for replacement that is used to replace the first terminal.

In an implementation, the APP on the control device may display, in a selection interface of the APP based on the obtained identifier of the second terminal and according to a filtering condition of device changing, at least one replaced device that can implement device replacement. In other words, the APP on the control device may select, based on the obtained new device information, at least one old device that can be used for device replacement, to select or determine which old device is replaced with the new device. For example, the device type of the second terminal is an air conditioner. If a filtering condition for device replacement preconfigured by the APP on the control device is that the device types are the same, the APP on the control device may determine, based on the device type of the second terminal, that the device type in the communication network is also an air conditioner (that is, the filtering condition for device replacement is met), and three terminals are included. In this case, the user needs to determine which air conditioner is a device that needs to be replaced, and the device is a terminal device, namely, the first terminal, that is used to be replaced.

604: The control device sends replacement information to the management server, where the replacement information includes the identifier of the second terminal and the verification information.

After determining that the second terminal device is the device for replacement, the control device may request the management server to perform a device registration procedure of the second terminal and the device replacement procedure of the second terminal.

In an implementation, the control device may send the identifier of the second terminal and the verification information to the management server within preset duration, that is, within a validity period of the verification information, to request to perform device registration on the second terminal, and replace the first terminal with the second terminal.

605: The management server performs identity authentication, and after the authentication succeeds, stores information of old and new devices.

Correspondingly, after receiving the identifier of the second terminal and the verification information, the management server may perform identity authentication based on the verification information, and determine whether the requested operation is a secure and valid device replacement operation. For example, the management server may determine whether the verification information carried in the request is the verification information generated and stored by the management server previously. If the verification information carried in the request is the verification information generated and stored by the management server previously, the management server determines that the device replacement authentication succeeds; or if the verification information carried in the request is not the verification information generated and stored by the management server previously, the management server determines that the device replacement authentication fails, and may interrupt or exit the device replacement procedure.

Then, after the identity authentication based on the verification information succeeds, the management server may match the corresponding information of the old device based on the verification information, that is, determine that the second terminal is configured to replace the first terminal. Therefore, the management server may store information of the old and new devices and the replacement relationship, that is, store identifiers of the first terminal and the second terminal and the replacement relationship between the first terminal and the second terminal. Specifically, the replacement relationship may be represented as that the second terminal is configured to replace the first terminal, or the first terminal is configured to be replaced with the second terminal.

606: The second terminal performs a network access and registration procedure.

Specifically, the second terminal may interact with the management server and the control device to perform a network configuration procedure of the second terminal and complete a device registration procedure.

In an implementation, the control device may send information related to network configuration to the second terminal, so that the second terminal may access a local area network based on the network configuration information. For example, the control device sends hotspot information of the local area network to the second terminal, so that the second terminal accesses a same network.

In an implementation, that the second terminal interacts with the management server to complete the device registration procedure may specifically include: The second terminal sends registration request information to the management server, where the registration request information may include at least one of the identifier, software and hardware version information, device type information, device identifier ID information, or the like of the second terminal.

607: The management server sends device registration information of the first terminal to the second terminal.

The management server may determine, based on the received identifier of the second terminal and the stored replacement relationship between the first terminal and the second terminal, that the replaced device corresponding to the second terminal is the first terminal, that is, the second terminal needs to replace the first terminal. Therefore, the management server may deliver the device registration information of the first terminal to the second terminal.

Specifically, the management server may determine the corresponding device registration information based on the first terminal, and send the device registration information corresponding to the first terminal to the second terminal as device registration information corresponding to the second terminal, so that the management server side implements device replacement of the first terminal with the second terminal. In addition, before and after the device replacement, the device registration information of the terminal device remains unchanged, that is, the device registration information of the new device is the same as the device registration information of the old device.

In an implementation, the method further includes: After the second terminal receives the device registration information, it indicates that the network access and registration procedure of the second terminal is successfully completed, and the second terminal may send, to the control device, a device replacement success response message, indicating that replacement with the second terminal is successful.

In the foregoing implementation, the control device and the management device side integrate the device replacement procedure into a network access and registration procedure of the new device, and match corresponding device registration information of the old device for the new device by recording a replacement relationship between the new device and the old device, so that the new device replaces the old device. The device registration information of the old device is the same as the device registration information of the new device. Therefore, there is no need to store two pieces of device registration information: device registration information of the new device for replacement and device registration information of the replaced old device. The device replacement procedure is simple, device service continuity can be maintained, and the device replacement efficiency is high. This improves user experience.

In addition, this application further provides an implementation. With reference to FIG. 7, the method may include the following steps.

701: In response to a device replacement operation of a user, a control device sends a replacement request to a second terminal.

The replacement request includes an identifier of a first terminal, and indicates to request to implement device replacement for the first terminal.

Correspondingly, the second terminal receives the replacement request from the control device, obtains the identifier of the first terminal, and stores the identifier of the first terminal.

Optionally, in an implementation, the control device may send the replacement request to a management server, where the replacement request includes the identifier of the first terminal; and then the management server forwards the replacement request to the second terminal, where the replacement request carries the identifier of the first terminal, and indicates that a device replacement operation needs to be performed on the first terminal.

In an implementation, to further perform security verification on a device replacement procedure, the control device may generate verification information in response to the device replacement operation of the user, and send the verification information to the management server, to indicate the management server to perform identity authentication on the device replacement operation on the first terminal. Therefore, subsequently, when the second terminal requests the management server to perform device registration, the management server may determine security based on the verification information, and perform the device replacement procedure after the identity verification succeeds.

702: The second terminal sends request information to the management server, where the request information includes the identifier of the first terminal.

In an implementation, the request information may be specifically a device registration request, and indicates the second terminal to request the management server to complete device registration, and request the management server to allocate device registration information to the second terminal. The device registration request includes an identifier of the second terminal. In addition, the device registration request may include the identifier of the first terminal, and is used to request to perform device registration on the second terminal and implement the device replacement procedure of the first terminal.

In other words, in this embodiment of this application, the existing device registration procedure is improved. In request information for requesting device registration by a new device, a field is extended to carry information about an identifier of a replaced old device, so that the management server can perform the following operations in a device registration procedure for the information.

In another implementation, the request information may be specifically a device replacement request, and indicates to currently request device replacement for the first terminal. **In** this manner, after sending the device replacement request to the management server, the second terminal may send the device registration request to the management server, where the device registration request includes the identifier of the second terminal, and indicates the management server to implement a device registration procedure of the second terminal, and allocate the corresponding device registration information to the second terminal.

In other words, the existing device registration request may not be improved. In this application, another piece of request information may be used to carry the identifier of the first terminal, so that the second terminal notifies the management server that the replaced device on which device replacement is performed is the first terminal, and the management server learns of identifiers of old and new devices and determines a replacement relationship.

703: The management server sends device registration information of the first terminal to the second terminal.

Optionally, after receiving the request information from the second device, the management server may store the identifier of the first terminal, the identifier of the second terminal, and a replacement relationship between the first terminal and the second terminal.

Then, the management server may determine, based on the identifier of the first terminal that is carried in the request information, the stored device registration information corresponding to the first terminal, and send the device registration information of the first terminal to the second terminal.

In the foregoing implementation, the second terminal may trigger the device registration procedure or the device replacement procedure, and the device registration request or the device replacement request sent by the second terminal to the management server carries the identifier of the first terminal, so that the management server may learn of the identifier of the current device for replacement and the identifier of the replaced device, and store a replacement relationship between the old and new devices, and the management server may send the device registration information allocated to the first terminal to the second terminal, to complete the device registration procedure and the device replacement procedure of the second terminal. In this implementation, device registration information of the old device is consistent with the device registration information of the new device before and after the old device is replaced with the new device, and the procedure is simplified. This effectively improves implementation efficiency of device replacement.

In addition, this application further provides an electronic device. The electronic device includes a memory and one or more processors. The memory is coupled to the processor. The memory is configured to store computer program code, and the computer program code includes computer instructions. For details, refer to FIG. 8. When the processor executes the computer instructions, the electronic device may perform the operations performed by the second terminal in the foregoing embodiments of this application, or the electronic device may perform the operations performed by the management server in the foregoing embodiments of this application, or the electronic device may perform the operations performed by the control device in the foregoing embodiments of this application.

An embodiment of this application further provides an electronic device. As shown in FIG. 8, the electronic device 800 may include at least one processor 801, a communication line 802, and a memory 803.

The processor 801 may be a general-purpose central processing unit (central processing unit, CPU), a microprocessor, an application-specific integrated circuit (application-specific integrated circuit, ASIC), or one or more integrated circuits that are configured to control execution of a program in the solutions of this disclosure.

The communication line 802 may include a path, such as a bus, for transferring information between the foregoing assemblies.

The memory 803 may be a read-only memory (read-only memory, ROM) or another type of static storage device that may store static information and instructions, a random access memory (random access memory, RAM) or another type of dynamic storage device that may store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code that has instructions or data structure form and that can be accessed by a computer. However, this is not limited herein. The memory may exist independently, and is connected to the processor through the communication line 802. The memory may alternatively be integrated with the processor. The memory provided in embodiments of this disclosure may be usually non-volatile. The memory 803 is configured to store computer-executable instructions for performing the solutions of this disclosure, and the processor 801 controls execution. The processor 801 is configured to execute the computer-executable instructions stored in the memory 803, to implement the method provided in embodiments of this disclosure.

Optionally, the computer-executable instructions in this embodiment of this disclosure may also be referred to as application code. This is not specifically limited in embodiments of this disclosure.

During specific implementation, in an embodiment, the processor 801 may include one or more CPUs, for example, a CPU 0 and a CPU 1 shown in FIG. 8.

During specific implementation, in an embodiment, the electronic device 800 may include a plurality of processors, for example, the processor 801 and a processor 807 shown in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the electronic device 800 may further include a communication interface 804. The communication interface 804 is configured to communicate with another device or a communication network by using any apparatus such as a transceiver, and is, for example, an Ethernet interface, a radio access network (radio access network, RAN) interface, or a wireless local area network (wireless local area network, WLAN) interface.

During specific implementation, in an embodiment, the electronic device 800 may further include an output device 805 and an input device 806. The output device 805 communicates with the processor 801, and may display information in a plurality of manners. For example, the output device 805 may be a liquid crystal display (liquid crystal display, LCD), a light emitting diode (light emitting diode, LED) display device, a cathode ray tube (cathode ray tube, CRT) display device, or a projector (projector). The input device 806 communicates with the processor 801, and may receive an input of a user in a plurality of manners. For example, the input device 806 may be a mouse, a keyboard, a touchscreen device, a sensor device, or the like.

During specific implementation, the electronic device 800 may be a desktop computer, a portable computer, a network server, a palmtop computer (personal digital assistant, PDA), a mobile phone, a tablet computer, an in-vehicle computer, a wireless terminal device, an embedded device, a wearable device, a home intelligent terminal, a device having a structure similar to that in FIG. 8, or the like. A type of the electronic device 800 is not limited in embodiments of this disclosure.

In some embodiments, the steps in FIG. 3, FIG. 6, or FIG. 7 may be performed by the processor 801 of the electronic device 800 by invoking the computer-executable instructions stored in the memory 803, so that the electronic device 800 performs the method in the foregoing method embodiment.

In an example embodiment, a storage medium including instructions is further provided, for example, a memory 803 including instructions. The instructions may be executed by the processor 801 of the electronic device 800 to complete the foregoing method.

All or some of the foregoing embodiments may be implemented by using software, hardware, firmware, or any combination thereof. When a software program is used to implement embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses.

A person skilled in the art can easily figure out another implementation solution of this disclosure after considering the specification and practicing the present invention that is disclosed herein. This application is intended to cover any variations, functions, or adaptive changes of this disclosure. These variations, functions, or adaptive changes comply with general principles of this disclosure, and include common knowledge or a commonly used technical means in the technical field that is not disclosed in this disclosure. The specification and the embodiments are only considered as examples, and the actual scope and the spirit of this disclosure are pointed out by the following claims.

In conclusion, the foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device replacement configuration method, wherein the method comprises:
sending, by a second terminal, request information to a management server, wherein the request information indicates to obtain device registration information allocated by the management server to a first terminal, and the second terminal is configured to replace the first terminal; and
sending, by the management server, the device registration information of the first terminal to the second terminal based on the request information.

2. The method according to claim 1, wherein the request information comprises an identifier of the second terminal.

3. The method according to claim 2, wherein before the sending, by a second terminal, request information to a management server, the method further comprises:
in response to a device replacement operation of a user, sending, by a control device, a replacement request to the management server, wherein the replacement request comprises an identifier of the first terminal, and indicates to implement device replacement for the first terminal; and
receiving, by the control device, verification information from the management server, wherein the verification information is generated by the management server based on the replacement request and is used for identity authentication.

4. The method according to claim 3, wherein the method further comprises:
sending, by the control device, replacement information to the management server, wherein the replacement information comprises the identifier of the second terminal and the verification information, and indicates that the second terminal is configured to replace the first terminal.

5. The method according to claim 4, wherein the sending, by the management server, the device registration information of the first terminal to the second terminal based on the request information specifically comprises:
obtaining, by the management server, the device registration information of the first terminal based on the identifier of the second terminal that is comprised in the request information, and sending the device registration information of the first terminal to the second terminal, wherein the management server stores a replacement relationship between the second terminal and the first terminal.

6. The method according to any one of claims 1 to 5, wherein the request information is device registration request information.

7. The method according to claim 1, wherein the request information comprises an identifier of the first terminal.

8. The method according to claim 7, wherein before the sending, by a second terminal, request information to a management server, the method further comprises:
in response to a device replacement operation of a user, sending, by a control device, a replacement request to the second device, wherein the replacement request comprises the identifier of the first terminal, and is used to request to replace the first terminal.

9. The method according to claim 7 or 8, wherein the request information is device registration request information or device replacement request information.

10. The method according to any one of claims 7 to 9, wherein the sending, by the management server, the device registration information of the first terminal to the second terminal based on the request information specifically comprises:
obtaining, by the management server, the device registration information of the first terminal based on the identifier of the first terminal, and sending the device registration information of the first terminal to the second terminal.

11. The method according to claim 2 or 7, wherein the identifier of the terminal comprises a device serial number SN and/or physical media access control address MAC information.

12. The method according to any one of claims 1 to 11, wherein the first terminal and the second terminal are terminal devices of a same type, or terminal devices having a same function, or terminal devices of a same device model; or
the first terminal and the second terminal are a same terminal device, wherein the second terminal refers to a state of the first terminal on which fault repair is performed.

13. The method according to any one of claims 1 to 12, wherein the method further comprises:
sending, by the management server, a device replacement success response message to the second terminal and/or the control device.

14. The method according to any one of claims 1 to 13, wherein the management server is a local management server or a remote cloud server.

15. A device replacement configuration method, wherein the method comprises:
sending, by a second terminal, request information to a management server, wherein the request information indicates to obtain device registration information allocated by the management server to a first terminal, and the second terminal is configured to replace the first terminal; and
obtaining, by the second terminal, the device registration information of the first terminal from the management server.

16. The method according to claim 15, wherein the request information comprises an identifier of the second terminal, or the request information comprises an identifier of the first terminal.

17. The method according to claim 15 or 16, wherein if the request information comprises the identifier of the first terminal, before the sending, by a second terminal, request information to a management server, the method further comprises:
receiving a replacement request from a control device, wherein the replacement request comprises the identifier of the first terminal, and indicates to request to replace the first terminal.

18. The method according to any one of claims 15 to 17, wherein the request information is device registration request information or device replacement request information.

19. The method according to any one of claims 15 to 18, wherein the first terminal and the second terminal are terminal devices of a same type, or terminal devices having a same function, or terminal devices of a same device model; or
the first terminal and the second terminal are a same terminal device, wherein the second terminal refers to a state of the first terminal on which fault repair is performed.

20. The method according to any one of claims 15 to 19, wherein the method further comprises:
receiving a device replacement success response message from the management server.

21. The method according to any one of claims 15 to 20, wherein the management server is a local management server or a remote cloud server.

22. A device replacement configuration method, wherein the method comprises:
receiving, by a management server, request information from a second terminal, wherein the request information indicates to obtain device registration information allocated by the management server to a first terminal, and the second terminal is configured to replace the first terminal; and
sending, by the management server, the device registration information of the first terminal to the second terminal based on the request information.

23. A device replacement configuration method, wherein the method comprises:
in response to a device replacement operation of a user, sending, by a control device, a replacement request to a management server, wherein the replacement request comprises an identifier of a first terminal, and indicates to implement device replacement for the first terminal; and
determining, by the control device, a second terminal, wherein the second terminal is configured to replace the first terminal.

24. The method according to claim 23, wherein the method further comprises:
receiving, by the control device, verification information from the management server; and
sending, by the control device, replacement information to the management server, wherein the replacement information comprises an identifier of the second terminal and the verification information, and indicates that the second terminal is configured to replace the first terminal.

25. A communication system, wherein the communication system comprises a first terminal, a second terminal, and a management server, wherein
the second terminal is configured to send request information to the management server, the request information indicates to obtain device registration information allocated by the management server to the first terminal, and the second terminal is configured to replace the first terminal; and
the management server is configured to send the device registration information of the first terminal to the second terminal based on the request information.

26. The communication system according to claim 25, wherein the communication system further comprises a control device, wherein
the control device is configured to send, in response to a device replacement operation of a user, a replacement request to the management server, wherein the replacement request comprises an identifier of the first terminal, and indicates to implement device replacement for the first terminal.

27. The communication system according to claim 26, wherein the control device is further configured to send replacement information to the management server, wherein the replacement information comprises an identifier of the second terminal and the verification information, and indicates that the second terminal is configured to replace the first terminal.

28. The communication system according to any one of claims 25 to 27, wherein the request information comprises the identifier of the first terminal or the identifier of the second terminal.

29. An electronic device, wherein the electronic device comprises a memory and one or more processors, the memory is coupled to the processor, the memory is configured to store computer program code, the computer program code comprises computer instructions, and when the processor executes the computer instructions, the electronic device is configured to perform the device replacement configuration method according to any one of claims 1 to 24.

30. A chip system, wherein the chip system is used in an electronic device, the chip system comprises one or more interface circuits and one or more processors, the interface circuit and the processor are interconnected through a line; the interface circuit is configured to: receive a signal from a memory of the electronic device, and send the signal to the processor, wherein the signal comprises computer instructions stored in the memory; and when the processor executes the computer instructions, the electronic device performs the device replacement configuration method according to any one of claims 1 to 24.

31. A computer-readable storage medium, wherein the readable storage medium stores instructions, and when the readable storage medium is run on an electronic device, the electronic device is enabled to perform the device replacement configuration method according to any one of claims 1 to 24.

32. A computer program product, wherein when the computer program product runs on a computer, the computer is enabled to perform the device replacement configuration method according to any one of claims 1 to 24.
